# EUROPÄISCHE PATENTANMELDUNG

(11) **EP 0 752 340 A1**
(43) Veröffentlichungstag der Anmeldung: **08.01.1997**
(21) Anmeldenummer: 96110933.7
(22) Anmeldetag: 06.07.1996
(51) Int. Cl.: B60P 3/34, B60J 11/00

(54) **Schutzdach**

(30) Priorität: 07.07.1995 DE 29511016 U
(71) Anmelder: Brandl, Hubert, 94377 Steinach (DE)
(72) Erfinder: Brandl, Hubert, 94377 Steinach (DE)
(74) Vertreter: Gustorf, Gerhard, Dipl.-Ing.

(57) **Zusammenfassung**

2. Das Schutzdach (14) dient zur Abdeckung des Daches (12) von Wohnwagen o.dgl. und hat ein Dachgerüst (18) aus aufblasbaren Schläuchen (20) für die Abstützung einer Dachplane (16). Dabei sind wenigstens zwei aufblasbare Schläuche (20) vorgesehen, an denen Längswülste (24) angeformt sind, welche in Kederleisten (26) eingeschoben werden können, die an den beiden Längsrändern des Daches (12) angebracht sind. An der Oberseite tragen die beiden Schläuche (20) einseitig offene, elastische Schnappelemente (40), die zum Befestigen von Versteifungsleisten (36) dienen, welche an der Unterseite der Dachplane (16) in Querrichtung verlaufend befestigt sind.

## Beschreibung

Die Erfindung betrifft ein Schutzdach für die Abdeckung des Daches von Wohnwagen, Mobilheimen, Dauerzelten o.dgl. mit einem Dachgerüst aus aufblasbaren Schläuchen für die Abstützung einer Dachplane.

Wohnwagen, Ganzjahreszelte o.dgl. werden häufig mit einem zusätzlichen Schutzdach abgedeckt, um sie vor extremen Witterungseinflüssen zu schützen, beispielsweise Schnee, Hagel oder starke Sonneneinstrahlung. Das Dachgerüst ist in vielen Fällen aus Metallstangen gebildet, die fachwerkartig zusammengesetzt sind. Obwohl das Gestänge im allgemeinen aus Leichtmetall besteht, ist es dennoch verhältnismäßig schwer und läßt sich meistens nur von geschultem Peronal montieren. Es besteht damit keine Möglichkeit, das Schutzdach bei Bedarf rasch zu entfernen, um es an einer anderen Stelle problemlos wieder aufzubauen, beispielsweise dann, wenn der Wohnwagen für einen Kurzurlaub in einer anderen Gegend benutzt werden soll.

Aus der DE-A 39 28 695 ist eine Einrichtung zum Schutz eines Fahrzeuges bekannt, die nach Art einer Luftmatratze ausgebildet ist. Dabei sind aufblasbare Hohlkörper in Längs- oder in Querrichtung des Fahrzeuges fest miteinander verbunden. Das bedeutet einerseits, daß die Einrichtung im zusammengelegten Zustand ein einziges, verhältnismäßig großes und schweres Paket bildet, das schwierig zu handhaben und zu verstauen ist, und daß andererseits eine Anpassung an unterschiedliche Fahrzeuggrößen nicht vorgenommen werden kann.

Der Erfindung liegt die Aufgabe zugrunde, ein Schutzdach der eingangs angegebenen Bauart so auszuilden, daß es bei geringstmöglichem Gewicht eine allen Anwendungsbedingungen genügende Steifigkeit aufweist und von jedem Benutzer ohne besondere Kenntnisse schnell und einfach montiert werden kann, wobei eine Anpassung an unterschiedliche Dachformen und Dachgrößen möglich sein soll.

Bei einem Schutzdach der angegebenen Gattung wird diese Aufgabe erfindungsgemäß dadurch gelöst, daß wenigstens zwei aufblasbare Schläuche vorgesehen sind, die Mittel zum Einschieben in am Rand des Daches des Wohnwagens o.dgl. in dessen Längsrichtung verlaufende Kederleisten sowie an ihrer Oberseite Elemente zum Befestigen von in Querrichtung verlaufenden, die Dachplane tragenden Versteifungsleisten haben.

Bei diesem Schutzdach bilden die beiden in Längsrichtung verlaufenden Schläuche und die Dachplane voneinander getrennte Bauelemente, die gesondert hergestellt und gelagert werden. Damit ist der Platzbedarf sowohl während des Transports als auch während der Aufbewahrung äußerst gering. Sowohl die Herstellung der einzelnen Elemente als auch deren Montage sind mit geringem Aufwand leicht durchzuführen. Eine Anpassung an unterschiedliche Dachformen und Dachgrößen ist aufgrund der getrennten Ausführung von Schläuchen und Dachplane problemlos möglich.

In Weiterbildung der Erfindung ist vorgesehen, daß die Mittel zum Einschieben in die Kederleisten aus an der Unterseite der Schläuche angebrachten Längswülsten bestehen. Die Längswülste können bei der Herstellung der Schläuche in einem Arbeitsprozess angeformt werden. Sie sind so flexibel, daß sie auch in Kederleisten stark gewölbter Dächer eingeschoben werden können.

Die Elemente zum Befestigen der Versteifungsleisten können aus elastischen Kunststoff-Schnappelementen bestehen, die einseitig offen und an der Oberseite der Schläuche fest angebracht sind. In diese Schnappelemente lassen sich nach dem Aufblasen der Schläuche die Versteifungsleisten, welche die Dachplane tragen, mühelos einklinken. Beim Abbau des Schutzdaches ermöglichen die elastischen Schnappelemente ein ebenso einfaches Auseinandernehmen des Schutzdaches.

Es ist besonders günstig, wenn an der Unterseite der Dachplane Taschen angebracht sind, in welche die Versteifungsleisten, die vorzugsweise teleskopisch ausgebildet sind, eingeschoben werden können. Die längenveränderlichen Versteifungsleisten gestatten eine Anpassung der Schutzdachbreite an die Breite des abzudeckenden Daches. Sie werden zur Verbindung der Dachplane mit den beiden Schläuchen in die Taschen eingesteckt und anschließend in die Schnappelemente gedrückt.

Zur weiteren Versteifung des Schutzdaches kann die Dachplane an ihren beiden Längsseiten je eine Tasche aufweisen, in die eine Verstärkungsleiste eingeschoben werden kann, die vorzugsweise elastisch ausgebildet ist.

Von Vorteil ist es ferner, wenn die beiden Schläuche unterschiedliche Durchmesser haben, so daß das Schutzdach auf dem Fahrzeug o.dgl. eine Schräglage einnimmt, die ein Ablaufen von Regenwasser begünstigt.

Die Erfindung ist nachstehend an drei Ausführungsbeispielen erläutert, die in der Zeichnung dargestellt sind. Es zeigen:
Figur 1 die Seitenansicht eines Wohnwagens mit Schutzdach gemäß der Erfindung,
Figur 2 die Rückansicht des Wohnwagens der Figur 1,
Figur 3 die Unteransicht der Abdeckplane vor ihrer Montage an den beiden aufgeblasenen Schläuchen,
Figur 4 die Seitenansicht eines Wohnwagens mit einem anders ausgebildeten Schutzdach,
Figur 5 die schematische Darstellung des Dachgerüstes der Figur 4 ohne Dachplane und
Figur 6 die Unteransicht einer weiteren Variante des Dachgerüstes.

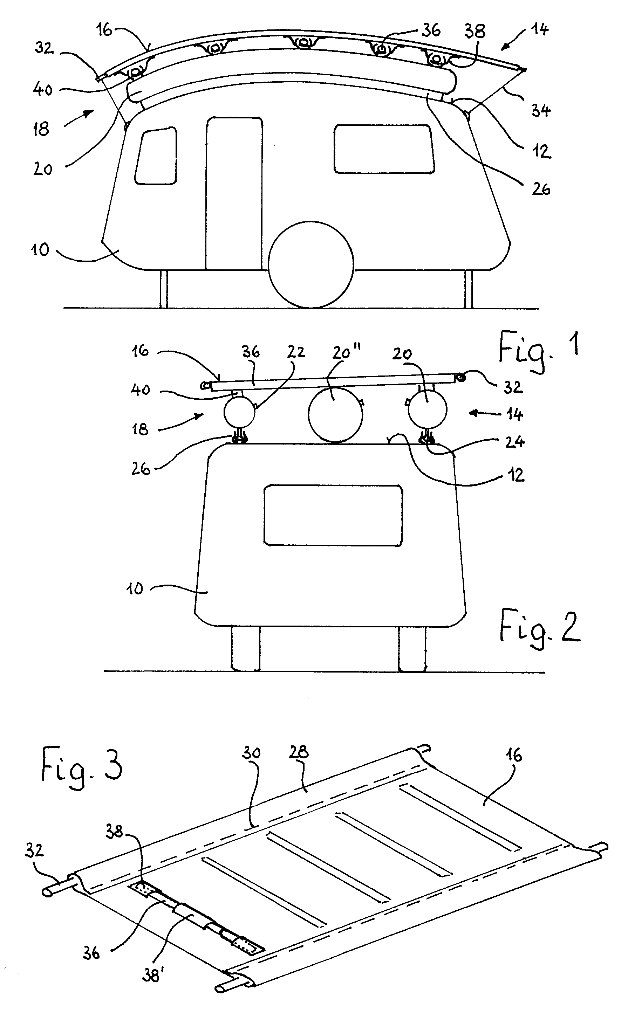

Die Figuren 1 und 2 zeigen einen herkömmlichen Wohnwagen 10, auf dessen Dach 12 ein Schutzdach 14 gemäß der Erfindung angebracht ist. Dieses Schutzdach 14 besteht aus einer rechteckigen Dachplane 16, die auf einem Dachgerüst 18 aufliegt und die aus wetterfestem Material, beispielsweise Kunststoff oder Textilgewebe, hergestellt ist.

Das Dachgerüst 18 besteht im wesentlichen aus zwei aufblasbaren Schläuchen 20 mit je einem Ventil 22. Die Schläuche 20, die gemäß dem Ausführungsbeispiel der Figur 2 unterschiedliche Durchmesser haben, sind als Toruskörper ausgebildet, wobei an ihrer Unterseite jeweils ein Längswulst 24 gleicher Länge angeformt ist. Dieser Längswulst 24 ist in eine Kederleiste 26 eingeschoben, die am rechten bzw. linken Rand des Daches 12 des Wohnwagens 10 angebracht ist. Die Länge jedes Schlauches 20 entspricht etwa der Länge des abzudeckenden Daches 12.

Figur 3 zeigt, daß die beiden Längsseiten der Dachplane 16 je eine durchgehende Tasche 28 haben, die beispielsweise durch Umschlagen des Randes der Dachplane 16 gebildet ist. Der umgeschlagene Rand ist mit dem übrigen Teil der Dachplane 16 durch eine Naht 30 verbunden, beispielsweise eine Schweißnaht oder eine genähte Naht. In jede Tasche 28 ist eine Verstärkungsleiste 32 eingeschoben, die gemäß Figur 1 mit ihren beiden Enden über ein Stützelement 34 am Wohnwagen 10 fixiert ist.

An der Unterseite der Dachplane 16 sind gemäß Figur 3 biegsame Versteifungsleisten 36 befestigt, die teleskopisch längenveränderlich sind, um eine Anpassung an die Breite der Dachplane 16 durchführen zu können. Die beiden Enden jeder Versteifungsleiste 36 sind in eine sackartige Tasche 38 eingesteckt, die an der Unterseite der Dachplane 16 befestigt ist, beispielsweise durch Nähen oder Kleben. Eine zusätzliche Fixierung jeder Versteifungsleiste 36 kann im Mittelteil durch eine weitere Tasche 38' erfolgen.

Auf der Oberseite der beiden Schläuche 20 sind gemäß Figur 1 aus Kunststoff hergestellte, elastische Schnappelemente 40 befestigt, die einseitig offen sind. In diese Schnappelemente 40 wird der nicht durch die Taschen 38, 38' abgedeckte Längenbereich der Versteifungsleisten 36 eingesteckt, so daß eine stabile Verbindung zwischen den beiden Schläuchen 20 und der in Figur 3 gezeigten Dachplane 16 hergestellt wird.

Figur 2 läßt erkennen, daß zur weiteren Abstützung der Dachplane 16 zwischen die beiden Schläuchen 20 ein zusätzlicher Schlauch 20'' gelegt werden kann, dessen Durchmesser dem Abstand zwischen dem Dach 12 und der Dachplane 16 entspricht.

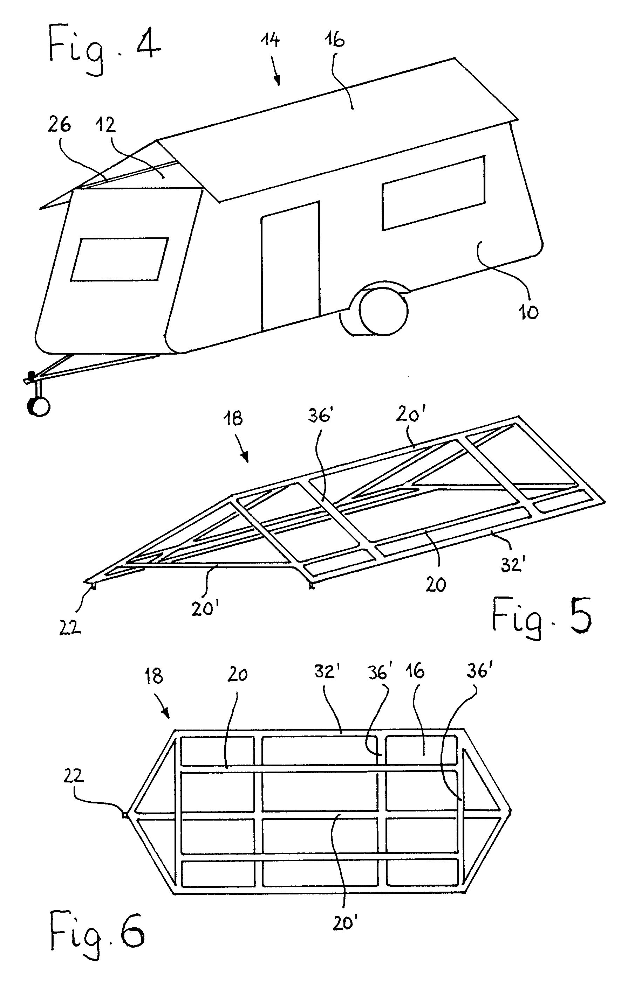

In den Ausführungsbeispielen der Figuren 4 bis 6 besteht das Dachgerüst 18 aus einer Vielzahl von aufblasbaren Schläuchen 20, 20', die einen geradlinigen Verlauf haben. Die Schläuche 20, 20' sind an ihren Verbindungsstellen wenigstens teilweise so miteinander verbunden, daß ihre Innenräume ineinander übergehen. Dementsprechend müssen mehrere Ventile 22 vorgesehen sein, um die Schläuche 20, 20', nacheinander mit Luft füllen zu können. Die in Querrichtung verlaufenden Schläuche sind mit den Schläuchen 20, 20' verbunden und bilden hier die Versteifungsleisten 36', während die Verstärkungsleisten 32' ebenfalls Schläuche sind, die an den beiden unteren Längsrändern der Dachplane 16 verlaufen.

Die Unteransicht des Dachgerüstes 18 der Figur 6 zeigt, daß dieses zwei in Längsrichtung innen verlaufende, geradlinige Schläuche 20 hat, die so dimensioniert sind, daß sie in die beiden in Figur 4 angedeuteten Kederleisten 26 des Daches 12 des Wohnwagens 10 eingeschoben werden können. Im Anschluß daran werden die beiden Schläuche 20 aufgeblasen und sitzen dann fest in den beiden Kederleisten 26.

Im vollständig aufgeblasenen Zustand aller Schläuche 20, 20' ist das Dachgerüst 10 sehr stabil, so daß es allen normalen Wettereinflüssen standhält. Bei Bedarf kann das Dachgerüst 18 nach Entleeren der Schläuche 20, 20' leicht abgenommen, gefaltet und verstaut werden. Auf diese Weise eignet es sich hervorragend auch für den Einsatz bei Kurzurlauben und an häufig wechselnden Standorten.

## Patentansprüche

1. Schutzdach für die Abdeckung des Daches von Wohnwagen, Mobilheimen, Dauerzelten oder dergleichen mit einem Dachgerüst aus aufblasbaren Schläuchen für die Abstützung einer Dachplane, dadurch gekennzeichnet, daß wenigstens zwei aufblasbare Schläuche (20) vorgesehen sind, die Mittel (24) zum Einschieben in am Rand des Daches (12) des Wohnwagens (10) o.dgl. in dessen Längsrichtung verlaufende Kederleisten (26) sowie an ihrer Oberseite Elemente (38) zum Befestigen von in Querrichtung verlaufenden, die Dachplane (16) tragenden Versteifungsleisten (36) haben.

2. Schutzdach nach Anspruch 1, dadurch gekennzeichnet, daß die Mittel zum Einschieben in die Kederleisten (26) aus an der Unterseite der Schläuche (20) angeformten Längswülsten (24) bestehen.

3. Schutzdach nach Anspruch 1, dadurch gekennzeichnet, daß die Schläuche (20) selbst in die Kederleisten (26) einsetzbar sind.

4. Schutzdach nach einem der vorhergehenden Ansprüche, dadurch gekennzeichnet, daß die Elemente zum Befestigen der Versteifungsleisten (36) aus an der Oberseite der Schläuche (20) fest angebrachten, einseitig offenen, elastischen Schnappelementen (40) bestehen.

5. Schutzdach nach Anspruch 4, dadurch gekennzeichnet, daß die Schnappelemente (40) aus Kunststoff bestehen.

6. Schutzdach nach einem der vorhergehenden Ansprüche, dadurch gekennzeichnet, daß die Versteifungsleisten (36) in an der Unterseite der Dachplane (16) angebrachte Taschen (38) einschiebbar sind.

7. Schutzdach nach einem der vorhergehenden Ansprüche, dadurch gekennzeichnet, daß die Versteifungsleisten (36) teleskopisch ausgebildet sind.

8. Schutzdach nach einem der vorhergehenden Ansprüche, dadurch gekennzeichnet, daß die Dachplane (16) an ihren beiden Längsseiten Verstärkungsleisten (32) aufweist.

9. Schutzdach nach Anspruch 8, dadurch gekennzeichnet, daß die Verstärkungsleisten (32) in Taschen (28) eingeschoben sind, die an den beiden Längsseiten der Dachplane (16) ausgebildet sind.

10. Schutzdach nach einem der vorhergehenden Ansprüche, dadurch gekennzeichnet, daß die beiden Schläuche (20) unterschiedliche Durchmesser haben.

11. Schutzdach nach einem der Ansprüche 1 bis 3 und 8, dadurch gekennzeichnet, daß die Versteifungsleisten (36') und/oder die Verstärkungsleisten (32') aus weiteren Schläuchen bestehen, die untereinander und mit den Schläuchen (20, 20') wenigstens teilweise so verbunden sind, daß ihre Innenräume ineinander übergehen.
